# EUROPÄISCHE PATENTSCHRIFT

(11) **EP 1 306 640 B1**
(45) Veröffentlichungstag und Bekanntmachung des Hinweises auf die Patenterteilung: **09.08.2006**
(21) Anmeldenummer: 02018823.1
(22) Anmeldetag: 23.08.2002
(51) Int. Cl.: F28F 9/02, F28F 9/18, F01N 3/04

(54) **Rohrboden für Abgaswärmeübertragung**
End plate for exhaust gas heat exchanger
Plaque tubulaire d'échangeur de chaleur pour gaz d'échappement

(30) Priorität: 26.10.2001 DE 10156611
(43) Veröffentlichungstag der Anmeldung: 02.05.2003
(73) Patentinhaber: Behr GmbH & Co. KG, 70469 Stuttgart (DE)
(72) Erfinder: Bächner, Thomas, Dipl.-Ing., 73650 Winterbach (DE); Brunner, Steffen, Dipl.-Ing., 71554 Weissach im Tal (DE)
(74) Vertreter: Grauel, Andreas

(56) Entgegenhaltungen:
- CH-A- 365 392
- DE-A- 2 706 849
- DE-A- 19 907 163
- US-A- 3 540 529
- US-A- 5 327 959
- PATENT ABSTRACTS OF JAPAN vol. 2000, no. 13, 5. Februar 2001 (2001-02-05) -& JP 2000 282963 A (NISSAN DIESEL MOTOR CO LTD;USUI INTERNATL IND CO LTD), 10. Oktober 2000 (2000-10-10)

## Beschreibung

Die Erfindung bezieht sich auf einen Rohrboden aus Edelstahl für Abgaswärmeübertrager nach dem Oberbegriff des Patentanspruches 1. Ein derartiger Rohrboden wurde durch die DE-A 199 07 163 der Anmelderin bekannt.

Der bekannte Abgaswärmeübertrager weist ein Gehäuse auf, in welchem ein Rohrbündel angeordnet ist, deren Rohrenden in zwei Rohrböden verschweißt sind, die ihrerseits mit dem Gehäuse verschweißt sind. Die Rohre werden von Abgas durchströmt und auf der Außenseite durch Kühlmittel, welches dem Kühlmittelkreislauf eines Verbrennungsmotors entnommen wird, gekühlt. Beim Betrieb eines solchen Abgaswärmeübertragers kann es durch die sehr hohen Temperaturwechselbeanspruchungen auf der Abgasseite zu Beschädigungen, insbesondere Brüchen des Rohrbodens bzw. der geschweißten Rohrbodenverbindungen kommen. Der Rohrboden des bekannten Abgaswärmeübertragers weist eine Wandstärke in der Größenordnung von 1 mm auf. In diesem relativ dünnen Rohrboden sind etwa rechteckförmige Öffnungen gitterartig angeordnet, und zwar mit einem relativ geringen Abstand, d. h. einem relativ schmalen Steg zwischen benachbarten Öffnungen. Die Stegbreite wird relativ klein gewählt, um eine möglichst kompakte Rohranordnung für den Abgaswärmeübertrager zu erzielen. Aus fertigungstechnischen Gründen kann die Stegbreite jedoch kaum kleiner als die Wandstärke des Bodens gewählt werden. Insofern müßte man bei einer größeren Wandstärke des Rohrbodens auch eine größere Stegbreite, d. h. einen größeren Abstand der Rohre in Kauf nehmen, was für die Leistung des Abgaswärmeübertragers von Nachteil wäre. Des weiteren wäre bei einem größerem Abstand die Abstützung der Rohre gegeneinander nicht mehr gegeben.

Es ist daher Aufgabe der vorliegenden Erfindung, einen Rohrboden für einen Abgaswärmeübertrager der eingangs genannten Art zu schaffen, der einerseits den hohen thermischen Wechselbelastungen gewachsen und andererseits stanztechnisch mit einer relativ geringen Stegbreite herstellbar ist.

Die Lösung dieser Aufgabe ergibt sich aus den Merkmalen des Patentanspruches 1. Durch das Anbringen, vorzugsweise das Prägen einer Fase am Rand der Rohröffnungen vor dem Stanzen wird die vom Stanzwerkzeug zu scherende Fläche in ihrer Höhe reduziert. Das Stanzwerkzeug , welches die fertige Rohröffnung erzeugt, muß also nicht die gesamte Wandstärke des Rohrbodens durchtrennen (durchscheren), sondern nur einen Bruchteil, der durch die Tiefe der Fase bestimmt wird. Durch diese konische Erweiterung der Öffnung auf einer Seite des Rohrbodens kann ein dickerer Boden mit kleiner Stegbreite gewählt werden, d. h. eine Bodenwandstärke, die größer als die Stegbreite ist.

Nach einer vorteilhaften Ausgestaltung der Erfindung weist der Rohrboden eine Wandstärke von größer als 1,5 mm bei einer ungefähren Stegbreite von 1,5 mm auf bzw. vorzugsweise eine Wandstärke von s = 2,0 mm bei einer Stegbreite von 1,5 mm. Dadurch wird der Rohrboden insgesamt hinsichtlich seiner Festigkeit verstärkt und ist somit in der Lage, die hohen Thermowechselbelastungen aufzunehmen. Andererseits kann die Stegbreite zwischen den einzelnen Öffnungen so klein gewählt werden, daß die Rohre dicht beieinander liegen und eine kompakte Bauweise des Abgaswärmeübertragers ermöglichen.

Ein Ausführungsbeispiel der Erfindung ist in der Zeichnung beschrieben und wird im Folgenden näher erleutert. Es zeigen:
- **Fig. 1**: eine perspektivische Ansicht eines Abgaswärmeübertragers,
- **Fig. 2**: einen Rohrboden für den Abgaswärmeübertrager und
- **Fig. 3**: einen Teilschnitt durch den Abgaswärmeübertrager mit Gehäuse, Rohrboden und Rohren.

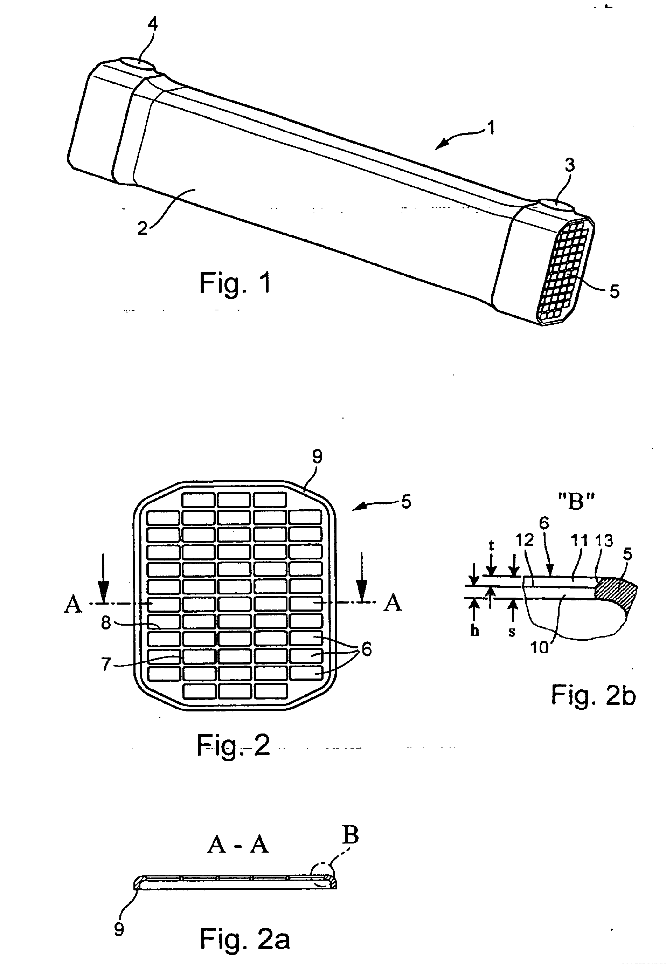

**Fig. 1** zeigt in perspektivischer Darstellung einen Abgaswärmeübertrager 1, welcher aus einem Gehäusemantel 2 mit einem Kühlmitteleinlaß 3 und einem Kühlmittelauslaß 4 sowie einem im Inneren des Gehäusemantels angeordneten, hier nicht erkennbaren Rohrbündel besteht, dessen Rohrenden jeweils in einem Rohrboden 5 aufgenommen und verschweißt sind. Der Rohrboden 5 ist mit dem Gehäusemantel 2 verschweißt. Diese Bauweise ist durch den Stand der Technik bekannt.

**Fig. 2** zeigt in einer Draufsicht den Rohrboden 5 als Einzelteil. Er weist eine Vielzahl von etwa rechteckförmigen Öffnungen 6 auf, die die nicht dargestellten Abgasrohre aufnehmen. Zwischen den einzelnen Öffnungen 6 sind jeweils in der Zeichnung vertikal verlaufende Stege 7 und horizontal verlaufende Stege 8 belassen, die eine Breite b = 1,5 mm aufweisen. Die Rechtecköffnungen haben etwa einen lichten Querschnitt von 6 x 13,5 mm². Diese Abmessungen entsprechen den Außenabmessungen der Abgasrohre. Der Rohrboden 5 weist ferner einen umlaufenden hochgestellten Rand 9 auf, der insbesondere in **Fig. 2a** erkennbar ist. Über diesen Rand 9 wird der Rohrboden 5 mit dem Gehäuse verschweißt.

**Fig. 2b** zeigt als Detail B in Fig. 2a einen Längsschnitt durch eine Öffnung 6, wobei nur die rechte Seite dargestellt ist (die linke ist symmetrisch). Die Öffnungen 6 sind durch zwei Wandabschnitte gekennzeichnet, nämlich einen unteren Abschnitt 10 und einen oberen Abschnitt 11, beide sind durch eine umlaufende Kante 12 voneinander getrennt. Der obere Abschnitt 11 ist durch eine umlaufende Fase 13 gekennzeichnet, d. h. eine konische Querschnittserweiterung nach Außen gegenüber dem unteren Abschnitt 10, der über die Höhe h einen konstanten Querschnitt aufweist. Die Tiefe der Fase 13 ist mit t gekennzeichnet, während die gesamte Wandstärke des Rohrbodens 5 mit s bezeichnet ist. Für das Stanzen der Öffnungen 6 ist es von entscheidender Bedeutung, daß die Fase 13 vor dem Stanzen der fertigen Öffnung 6 hergestellt wird. Dies geschieht in der Weise, daß zunächst eine kleinere (nicht dargestellte) Öffnung durch sogenanntes Vorstanzen hergestellt und daran anschließend die Fase 13 durch einen Präge- oder Fließpressvorgang erzeugt wird. Daran anschließend wird mit einem Stanzwerkzeug, welches die Kontur der Öffnungen 6 aufweist, die Öffnung 6 mit dem gestanzten Abschnitt 10 hergestellt. Dabei muß das Stanzwerkzeug nur eine Materialdicke von der Höhe h durchtrennen. Bei einer Bodenwandstärke von s = 2,0 mm beträgt die Höhe h = 1 mm und die Tiefe t der Fase somit ebenfalls 1 mm. Bei diesem Stanzvorgang muß also nicht die gesamte Bodenwandstärke von 2 mm durchtrennt werden, sondern nur 50 % - dadurch können die Stege auch mit einer geringen Breite von 1,5 mm gewählt werden, ohne daß sie beim Stanzen eine Beeinträchtigung erfahren.

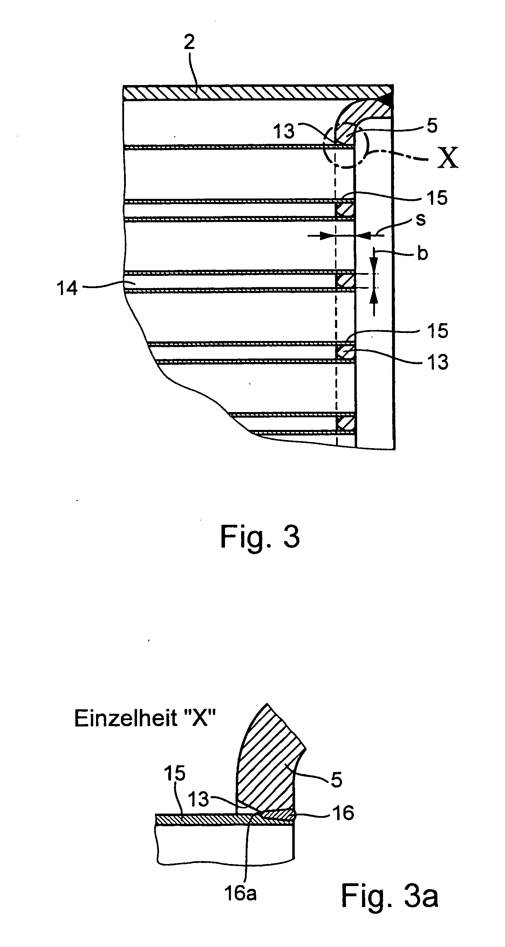

**Fig. 3** zeigt einen Ausschnitt aus dem Abgaswärmeübertrager in einem Längsschnitt, bei welcher der Gehäusemantel 2, der Rohrboden 5 und Abgasrohre 14 dargestellt sind. Die Rohrenden 15 der Rohre 14 sind in die Öffnungen des Rohrbodens 5 eingeschweißt. Der Rohrboden hat eine Wandstärke von s = 2,0 mm und eine Stegbreite von b = 1,5 mm. Normalerweise ist eine derartige Geometrie für den Rohrboden bei einem Verhältnis von s/b > 1 stanztechnisch nicht herstellbar.Durch die oben bereits beschriebene Fase 13, die auf der Kühlmittelseite des Rohrbodens angeordnet ist, können diese Öffnungen mit den angegebenen Maßen jedoch stanztechnisch hergestellt werden.

**Fig. 3a** zeigt eine in Fig. 3 nicht dargestellte Schweißnaht 16 als Einzelheit X aus Fig. 3. Dabei wird deutlich erkennbar, daß die Wurzel 16a der durch Laserschweißen erzeugten Schweißnaht 16 bis zum Beginn der Fase 13 reicht. Durch diese Ausbildung ist eine bessere Verschweißung von Rohr und Boden möglich.

Der Rohrboden des oben beschriebenen Abgaswärmeübertragers, bei dem Temperaturen bis zu 800° C auftreten, ist vorzugsweise aus einer Edelstahllegierung hergestellt, dies gilt auch für die Abgasrohre und den Gehäusemantel.

## Patentansprüche

1. Rohrboden aus Edelstahl für Abgaswärmeübertrager mit gestanzten Öffnungen zur Aufnahme von Rohrenden eines Rohrbündels, wobei die Öffnungen einen rechteckförmigen Querschnitt aufweisen und unter Belassung einer Stegbreite b gitterartig angeordnet sind, **dadurch gekennzeichnet, daß** die Öffnungen (6) jeweils eine durch Stanzen erzeugte Scherfläche (10) der Höhe h aufweisen, an welche sich eine Fase (11, 13) der Tiefe t anschließt, die vor dem Stanzen hergestellt ist, und daß die Höhe h etwa der Stegbreite b entspricht oder kleiner ist.

2. Rohrboden nach Anspruch 1, **dadurch gekennzeichnet, daß** die Wandstärke des Rohrbodens (5) s ≥ 1,5 mm und die Stegbreite b ≈ 1,5 mm beträgt.

3. Rohrboden nach Anspruch 1 oder 2, **dadurch gekennzeichnet, daß** die Wandstärke s = 2,0 mm und die Stegbreite b = 1,5 mm beträgt.

4. Abgaswärmeübertrager mit mindestens einem Rohrboden und einem Rohrbündel, wobei Rohrenden des Rohrbündels von Öffnungen des Rohrbodens aufgenommen sind, **dadurch gekennzeichnet, dass** der Rohrboden gemäß einem der vorhergehenden Ansprüche ausgebildet ist.

5. Abgaswärmeübertrager nach Anspruch 4, **dadurch gekennzeichnet, dass** die Rohrenden mit dem Rohrboden durch eine auf der Abgasseite angeordnete Schweißnaht dicht verbunden und die Fasen (13) an den Öffnungen (6) auf der der Schweißnaht (16) abgewandten Seite des Rohrbodens (5) angeordnet sind.

6. Abgaswärmeübertrager nach Anspruch 5, **dadurch gekennzeichnet, daß** sich eine Wurzel (16a) der Schweißnaht (16) bis zu der Fase (13) erstreckt.

7. Verfahren zur Herstellung eines Rohrbodens aus Edelstahl für einen Abgaswärmeübertrager mit unter Belassung einer Stegbreite b gitterartig angeordneten Öffnungen mit rechteckförmigem Querschnitt zur Aufnahme von Rohrenden eines Rohrbündels, wobei die Öffnungen jeweils eine Scherfläche der Höhe h aufweisen, an welche sich eine Fase der Tiefe t anschließt, **dadurch gekennzeichnet, dass** die Scherflächen (10) durch Stanzen erzeugt und die Fasen (11, 13) vor dem Stanzen hergestellt werden, und dass die Öffnungen (6) so gestanzt werden, dass die Höhe h etwa der Stegbreite b entspricht oder kleiner ist.

8. Verfahren nach Anspruch 7, **dadurch gekennzeichnet, dass** die Fase (13) durch Prägen hergestellt ist.

9. Verfahren zur Herstellung eines Abgaswärmeübertragers mit mindestens einem Rohrboden, bei dem Rohrenden eines Rohrbündels von Öffnungen des Rohrbodens aufgenommen und mit dem Rohrboden jeweils durch eine auf der Abgasseite angeordnete Schweißnaht dicht verbunden werden, **dadurch gekennzeichnet, dass** der Rohrboden mit einem Verfahren gemäß einem der Ansprüche 7 oder 8 hergestellt wird.

10. Verfahren nach Anspruch 9, **dadurch gekennzeichnet, dass** die Schweißnaht (16) an der Öffnung (6) auf der der Fase (13) abgewandten Seite des Rohrbodens (5) erzeugt wird.

11. Verfahren nach Anspruch 10, **dadurch gekennzeichnet, dass** eine Schweißnaht (16) mit einer Wurzel (16a) erzeugt wird, die sich bis zu der Fase (13) erstreckt.

## Claims

1. An end plate made of stainless steel for exhaust gas heat exchangers having punched openings for receiving tube ends of a tube bundle, the openings having a rectangular cross-section and being positioned in the manner of a grid leaving a web breadth (b),
**characterised in that**
the openings (6) each have a shearing section (10) produced by punching of height (h) adjacent to which is a bezel (11, 13) of depth (t) which is manufactured prior to punching, and the height (h) corresponds approximately to or is less than the web breadth (b).

2. An end plate in accordance with claim 1,
**characterised in that**
the wall thickness (s) of the end pate (5) ≥1.5 mm and the web breadth (b) ≈ 1.5 mm.

3. An end plate in accordance with claim 1 or 2,
**characterised in that**
the wall thickness (s) = 2.0 mm and the web breadth (b) = 1.5 mm.

4. An exhaust gas heat exchanger having at least one end plate and one tube bundle, tube ends of the tube bundle being received in openings in the end plate,
**characterised in that**
the end plate is designed in accordance with one of the preceding claims.

5. An exhaust gas heat exchanger in accordance with claim 4,
**characterised in that**
the tube ends are connected to the end plate in a leak-proof manner by means of a weld seam positioned on the exhaust gas side and the bezels (13) are positioned at the openings (6) on the side of the end plate (5) facing away from the weld seam (16).

6. An exhaust gas heat exchanger in accordance with claim 5,
**characterised in that**
a root (16a) of the weld seam (16) extends as far as the bezel (13).

7. A process for the manufacture of an end plate made of stainless steel for an exhaust gas heat exchanger having openings positioned in the manner of a grid leaving a web breadth (b) for receiving tube ends of a tube bundle, the openings each having a shearing section of height (h) adjacent to which is a bezel of depth (t),
**characterised in that**
the shearing sections (10) are produced by means of punching and the bezels (11, 13) are manufactured prior to punching and the openings (6) are punched in such a manner that the height (h) corresponds approximately to or is less than the web breadth (b).

8. A process in accordance with claim 7,
**characterised in that**
the bezel (13) is produced by means of stamping.

9. A process for the manufacture of an exhaust gas heat exchanger having at least one end plate, tube ends of a tube bundle being received in openings in the end plate and connected to the end plate in a leak-proof manner by means of a weld seam positioned on the exhaust gas side,
**characterised in that**
the end plate is manufactured using a process in accordance with one of claims 7 or 8.

10. A process in accordance with claim 9,
**characterised in that**
the weld seam (16) is made at the opening (6) on the side of the end plate (5) facing away from the bezel (13).

11. A process in accordance with claim 10,
**characterised in that**
a weld seam (16) is made with a root (16a) which extends as far as the bezel (13).

## Revendications

1. Plaque tubulaire en acier spécial, pour un échangeur de chaleur de gaz d'échappement comprenant des ouvertures estampées servant au logement d'extrémités tubulaires d'un faisceau de tubes, les ouvertures présentant une section rectangulaire et étant disposées en forme de grille, en laissant un écartement des bords b, **caractérisée en ce que** les ouvertures (6) présentent à chaque fois une surface de cisaillement (10) - ayant la hauteur h - produite par estampage, surface de cisaillement à laquelle fait suite un chanfrein (11, 13), ayant la profondeur t, qui a été réalisé avant l'estampage, et **en ce que** la hauteur h correspond à peu près à l'écartement des bords b ou est inférieure à celui-ci.

2. Plaque tubulaire selon la revendication 1, **caractérisée en ce que** l'épaisseur de paroi s de la plaque tubulaire (5) est supérieure ou égale à 1,5 mm et l'écartement des bords b est à peu près égal à 1,5 mm.

3. Plaque tubulaire selon la revendication 1 ou 2, **caractérisée en ce que** l'épaisseur de paroi s est égale à 2,0 mm et l'écartement des bords b est égal à 1,5 mm.

4. Échangeur de chaleur de gaz d'échappement comprenant au moins une plaque tubulaire et un faisceau de tubes, les extrémités tubulaires du faisceau de tubes étant logées dans des ouvertures de la plaque tubulaire, **caractérisé en ce que** la plaque tubulaire est configurée selon l'une quelconque des revendications précédentes.

5. Échangeur de chaleur de gaz d'échappement selon la revendication 4, **caractérisé en ce que** les extrémités tubulaires sont raccordées à la plaque tubulaire, de manière étanche, par un cordon de soudure disposé côté gaz d'échappement, et les chanfreins (13), au niveau des ouvertures (6), sont disposés sur le côté de la plaque tubulaire (5), placé à l'opposé du cordon de soudure (16).

6. Échangeur de chaleur de gaz d'échappement selon la revendication 5, **caractérisé en ce qu'**une racine (16a) du cordon de soudure (16) s'étend jusqu'au chanfrein (13).

7. Procédé de fabrication d'une plaque tubulaire en acier spécial, pour un échangeur de chaleur de gaz d'échappement comprenant des ouvertures à section rectangulaire disposées en forme de grille, en laissant un écartement des bords b, lesdites ouvertures servant au logement d'extrémités tubulaires d'un faisceau de tubes, les ouvertures présentant à chaque fois une surface de cisaillement - ayant la hauteur h - à laquelle fait suite un chanfrein ayant la profondeur t, **caractérisé en ce que** les surfaces de cisaillement (10) sont produites par estampage, et les chanfreins (11, 13) sont réalisés avant l'estampage, et **en ce que** les ouvertures (6) sont estampées de manière telle, que la hauteur h corresponde à peu près à l'écartement des bords b ou soit inférieure à celui-ci.

8. Procédé selon la revendication 7, **caractérisé en ce que** le chanfrein (13) est réalisé par matriçage.

9. Procédé de fabrication d'un échangeur de chaleur de gaz d'échappement comprenant au moins une plaque tubulaire, échangeur de chaleur dans lequel les extrémités tubulaires d'un faisceau de tubes sont logées dans des ouvertures de la plaque tubulaire et sont reliées à chaque fois à la plaque tubulaire, de manière étanche, par un cordon de soudure disposé côté gaz d'échappement, **caractérisé en ce que** la plaque tubulaire est fabriquée par un procédé selon la revendication 7 ou 8.

10. Procédé selon la revendication 9, **caractérisé en ce que** le cordon de soudure (16), au niveau de l'ouverture (6), est réalisé sur le côté de la plaque tubulaire (5), placé à l'opposé du chanfrein (13).

11. Procédé selon la revendication 10, **caractérisé en ce qu'**un cordon de soudure (16) est réalisé avec une racine (16a) qui s'étend jusqu'au chanfrein (13).
